# EUROPÄISCHE PATENTSCHRIFT

(11) **EP 1 567 248 B1**
(45) Veröffentlichungstag und Bekanntmachung des Hinweises auf die Patenterteilung: **13.12.2006**
(21) Anmeldenummer: 03811720.6
(22) Anmeldetag: 15.07.2003
(51) Int. Cl.: B01D 53/94, B01D 53/90

(54) **VORRICHTUNG ZUR ENTFERNUNG EINES REDUKTIONSMITTELS AUS EINER APPARATUR ZUM NACHBEHANDELN VON ABGASEN EINER BRENNKRAFTMASCHINE**
DEVICE FOR REMOVING REDUCING AGENT FROM A PIECE OF EQUIPMENT FOR AFTER-TREATMENT OF EXHAUST GASES OF AN INTERNAL COMBUSTION ENGINE
DISPOSITIF PERMETTANT D' ELIMINER UN AGENT DE REDUCTION D'UN APPAREIL DE POST-TRAITEMENT DES GAZ D' ECHAPPEMENT D'UN MOTEUR A COMBUSTION INTERNE

(30) Priorität: 26.11.2002 DE 10254981
(43) Veröffentlichungstag der Anmeldung: 31.08.2005
(73) Patentinhaber: ROBERT BOSCH GMBH, 70442 Stuttgart (DE)
(72) Erfinder: MAYER, Thorsten, 67551 Worms (DE); BUERGLIN, Markus, 71254 Ditzingen (DE); RIPPER, Wolfgang, 70327 Stuttgart (DE)
(86) Internationale Anmeldenummer: PCT/DE2003/002370
(87) Internationale Veröffentlichungsnummer: WO 2004/047963

(56) Entgegenhaltungen:
- EP-A- 0 586 913
- WO-A-96/08639
- DE-A- 19 946 903

## Beschreibung

Die Erfindung betrifft eine Vorrichtung zur Entfernung eines Reduktionsmittels, insbesondere von Harnstoff bzw. einer Harnstoff-Wasser-Lösung, aus einer Apparatur zum Nachbehandeln von Abgasen einer Brennkraftmaschine, welche zumindest einen Reduktionsmittelspeicher, eine Fördervorrichtung für das Reduktionsmittel, eine Reduktionsmittelleitung sowie ein Dosierventil aufweist.

### Stand der Technik

Bei heutigen, modernen Brennkraftmaschinen, wie z.B. direkteinspritzenden Dieselmotoren, steht die Verbrauchsoptimierung häufig im Vordergrund. Zur Realisierung der Verbrauchsoptimierung wird in die Motorsteuerung durch Wahl von Einspritzzeitpunkt, Einspritzverlauf, Einspritzlänge sowie Einspritzdruck verbrauchsoptimierend eingegriffen. Durch diese Verbrauchsoptimierung entstehen sehr hohe, NOₓ-begünstigende Spitzentemperaturen.

Zur Erfüllung insbesondere zukünftiger vom Gesetzgeber vorgeschriebener Schadstoffgrenzwerte sind zahlreiche Vorrichtungen und Verfahren zur Nachbehandlung von Abgasen in Brennkraftmaschinen entwickelt worden. Effiziente Schadstoffnachbehandlungssysteme zur Reduzierung der NOₓ-Emmissionen arbeiten auf der Basis von Katalysatoren, wobei Reduktionsmittel, wie Harnstoff und/oder Ammoniak, verwendet werden.

Ein Verfahren zur Reduzierung der NOₓ-Emmissionen in Abgasen von Dieselmotoren ist das SCR-Verfahren (engl. Selective Catalytic Reduction). Hierbei wird Harnstoff in wässriger Form dem Abgastrakt des Dieselmotors zugeführt. Durch entsprechend angeordnete und spezifizierte Katalysatoren wird aus der Harnstoff-Wasser-Lösung Ammoniak (NH₃) gebildet. Dieses Ammoniak reagiert selektiv am SCR-Katalysator mit den im dieselmotorischen Abgas enthaltenen Stickoxiden (NOₓ) zu molekularem Stickstoff (N₂) und Wasser (H₂O).

Das Reduktionsmittel, insbesondere Harnstoff, wird dabei während des Verbrennungsvorgangs der Brennkraftmaschine von einem Reduktionsmittelspeicher, in der Regel mit Hilfe einer Pumpe und eines Drucksensors, durch eine Reduktionsmittelleitung zu einem Dosierventil gefördert.

Nachteilig bei diesem Verfahren ist, dass es nach Beendigung des Verbrennungsvorgangs und damit auch der Förderung des Reduktionsmittels in den Abgastrakt zu Verstopfungen, Verkrustungen und Auskristallisationen in dem Dosierventil sowie der Reduktionsmittelleitung kommen kann. Das Reduktionsmittel bleibt nach Beendigung des Verbrennungsvorgangs in dem Dosierventil und der Reduktionsmittelleitung stehen, wodurch diese Effekte entstehen können. Insbesondere im Bereich des Dosierventils kann es aufgrund des bestehenden Temperaturniveaus im Abgastrakt zu Verkrustungen und damit zu Verstopfungen kommen.

Des weiteren besteht eine große Gefahr darin, dass das in dem Dosierventil und der Reduktionsmittelleitung zurückbleibende Reduktionsmittel gefriert. Bei der Verwendung beispielsweise von 32,5%-iger Harnstoff-Wasser-Lösung als Reduktionsmittel kann es zum einen zu Auskristallisationen kommen, und zum anderen besteht bei einer niedrigeren Außentemperatur von weniger als -11°C die Gefahr des Gefrierens der Harnstoffwasserlösung im Dosierventil bzw. in der Reduktionsmittelleitung.

Durch die Gefrierproblematik und Problematik der Verstopfung durch Verkrustung oder Auskristallisation kann das Schadstoffnachbehandlungssystem nicht mehr einwandfrei funktionieren. Als Folge daraus kann entweder kein Reduktionsmittel bzw. zuwenig Reduktionsmittel in den Abgastrakt eingebracht werden, wodurch eine Schadstoffreduktion im Abgas nicht gewährleistet ist.

Um eine eingefrorene Reduktionsmittelleitung aufzutauen, ist eine Heizvorrichtung notwendig, welche zusätzliche Energie benötigt.

Die WO 96/08639 beschreibt eine Abgasreinigungsvorrichtung, bei der eine Harnstoff-Wasserlösung als Reduktionsmittel verwendet wird. Bei Stillsetzung der Verbrennungsanlage wird die Reduktionsmittel-Zuführungsleitung mittels eines durch ein Ventil einleitbares Druckgas in den Vorratsbehälter und die Abgasleitung entleert.

Ein Ziel der Erfindung ist es, eine Vorrichtung zu schaffen, die das Reduktionsmittel aus der Apparatur zum Nachbehandeln von Abgasen einer Brennkraftmaschine, insbesondere aus dem Dosierventil und den Reduktionsmittelleitungen, nach Beendigung des Verbrennungsvorgangs der Brennkraftmaschine entfernt und dadurch zusätzliche Heizvorrichtungen zum Auftauen einer zugefrorenen Reduktionsmittelleitung unnötig macht.

Dieses Ziel wird erfindungsgemäß durch eine Vorrichtung mit den Merkmalen des Patentanspruchs 1 erreicht.

### Vorteile der Erfindung

Durch die erfindungsgemäße Maßnahme, eine Vorrichtung zur Entfernung des Reduktionsmittels aus einer Apparatur zum Nachbehandeln von Abgasen einer Brennkraftmaschine, insbesondere aus dem Dosierventil und/oder der Reduktionsmittelleitung der Apparatur, zu schaffen, die mit zumindest einer Druckluftpumpe versehen ist, ist es in einfacher Weise möglich ein verwendetes Reduktionsmittel nach Beendigung des Verbrennungsvorgangs zu entfernen.

Mit Hilfe der Druckluftpumpe wird Druckluft, die aus der Umgebung angesaugt wird, in die Apparatur zum Nachbehandeln von Abgasen einer Brennkraftmaschine eingebracht, wodurch die Komponenten der Apparatur, durch die das Reduktionsmittel fließt, gespült werden, so dass das Reduktionsmittel vollständig entfernbar ist.

Die Druckluftpumpe fördert Druckluft durch die Reduktionsmittelleitung sowie das Dosierventil wahlweise entweder in Richtung Mischkammer des Abgastraktes oder in Richtung des Reduktionsmittelspeichers. Das nach Beendigung des Verbrennungsprozesses verbliebene Reduktionsmittel, welches sich in dem Bereich zwischen Druckluftpumpe und Dosierventil befindet, wird durch das Einblasen von Druckluft in die Mischkammer des Abgastraktes gespült. Das in dem Bereich zwischen Druckluftpumpe und Reduktionsmittelspeicher verbliebene Reduktionsmittel wird zurück in den Reduktionsmittelspeicher gespült.

Zweckmäßigerweise ist die Druckluftpumpe an ein in der Reduktionsmittelleitung angeordnetes erstes Ventil, insbesondere ein 3/3-Wegeventil, angeschlossen. Dieses erste Ventil ist so einstellbar, dass es verschiedene Durchflüsse von Druckluft bzw. Reduktionsmittel zulässt. Bei Durchführung des Verbrennungsprozesses ist das Ventil so eingestellt, dass es einen einwandfreien Durchfluss des Reduktionsmittels vom Reduktionsmittelspeicher bis zum Dosierventil gewährleistet. Hierbei ist die Verbindung zur Druckluftpumpe geschlossen.
In einer zweiten Position lässt es einen Durchfluss der Druckluft von Druckluftpumpe zum Dosierventil zu, wobei es den Durchfluss zum Reduktionsmittelspeicher unterbindet.
In einer dritten Position stellt es eine Verbindung zwischen Druckluftpumpe und Reduktionsmittelspeicher her, wobei die Verbindung zum Dosierventil unterbunden ist.

Das erste Ventil kann dabei an einer beliebigen Stelle in der Reduktionsmittelleitung angeordnet sein. Zweckmäßigerweise ist es so angeordnet, dass es die Reduktionsmittelleitung in zwei Bereiche unterteilt. Das Ventil könnte aber auch direkt vor dem Dosierventil eingebracht sein.

Wenn zur Leitung des Reduktionsmittels zwischen dem ersten Ventil und dem Reduktionsmittelspeicher ein zweites Ventil, insbesondere ein 3/2-Wegeventil, angeordnet ist, wird eine optimale Förderung des Reduktionsmittels aus dem Reduktionsmittelspeicher sowie ein optimaler Rücklauf des Reduktionsmittels zurück in den Speicher ermöglicht. Über eine erste Leitung wird das Reduktionsmittel aus dem Reduktionsmittelspeicher mit Hilfe einer Fördervorrichtung, in der Regel eine Pumpe, zum zweiten Ventil gefördert. Die Leitung ist dabei im unteren Bereich des Reduktionsmittelspeichers angeordnet, so dass das Reduktionsmittel leicht gefördert werden kann. Um das Reduktionsmittel zurück in den Speicher zu befördern, ist idealerweise zwischen dem oberen Bereich des Speichers und dem zweiten Ventil eine Rücklaufleitung vorgesehen, wobei die Öffnung der Leitung im Speicher im reduktionsmittelfreien Bereich liegt. Je nach Erfordernis, ob Reduktionsmittel gefördert oder zurückgespült werden soll, ist das zweite Ventil regulierbar bzw. ansteuerbar. In dem oberen Bereich des Reduktionsmittelspeichers ist ein Entlüftungsventil angeordnet, welches für einen Druckausgleich sorgt, wenn durch die in den Speicher einströmende Druckluft der Druck zunimmt.

Vorteilhafte Ausgestaltungen der erfindungsgemäßen Vorrichtung sind Gegenstand der Unteransprüche.

Ebenfalls vorteilhaft ist es, dass die Vorrichtung einen Temperaturfühler aufweist. Durch den Temperaturfühler wird die Temperatur in oder außerhalb der Reduktionsmittelleitung gemessen. Durch die Feststellung der Temperatur kann überprüft werden, ob die kritische Temperatur eines Gefrierens des Reduktionsmittels erreicht ist. Die Reinigung des Dosierventils und der Leitungen kann abhängig von der Temperatur erfolgen. So ist ein Durchspülen mit Druckluft nicht notwendig, wenn der kritische Temperaturbereich zum Gefrieren des Reduktionsmittels nicht erreicht wird. Fällt die Temperatur in die Nähe oder unter diesen kritischen Temperaturbereich, kann über ein Signal an die Druckluftpumpe die Eindüsung von Druckluft veranlasst werden.

Vorteilhafterweise weist die Vorrichtung ferner zumindest ein Steuergerät zur Steuerung der Fördervorrichtung, der Druckluftpumpe, des Dosierventils, des ersten und zweiten Ventils und/oder zur Detektierung der Außentemperatur durch den Temperaturfühler auf. Ein Regler ist als Software in dem Steuergerät integriert ausgebildet. Das Steuergerät nimmt Signale auf und gibt Steuersignale an die entsprechenden Komponenten der Vorrichtung ab.

Vorteilhaft ist weiterhin, dass die Druckluftpumpe ein Filterelement zur Reinigung der Ansaugluft aufweist. Die Umgebungsluft wird durch das Filterelement in die Druckluftpumpe gesaugt. Hierdurch wird gewährleistet, dass die Druckluft nicht verunreinigt ist, und keine sonstigen Verunreinigungen in die Reduktionsmittelleitungen und in die entsprechenden Ventile gelangen können.

Eine Batterie stellt eine einfache Möglichkeit dar, die Druckluftpumpe in Betrieb zu setzen. So kann beispielsweise eine 12-Volt-Batterie, wie sie in vielen Fahrzeugen verwendet wird, genutzt werden.

Ziel der Erfindung ist es weiterhin, ein Verfahren zu schaffen, mit Hilfe dessen auf einfache und kostengünstige Weise das Reduktionsmittel aus einer Apparatur zum Nachbehandeln von Abgasen einer Brennkraftmaschine, insbesondere aus dem Dosierventil und/oder der Reduktionsmittelleitung der Apparatur, entfernt werden kann.

Dieses Ziel wird erfindungsgemäß mit einem Verfahren nach Anspruch 6 gelöst.

Hierbei wird nach Beendigung des Verbrennungsvorgangs Druckluft durch die Apparatur zum Nachbehandeln von Abgasen einer Brennkraftmaschine, insbesondere durch das Dosierventil und/oder durch die Reduktionsmittelleitung, gepumpt.

Während des Verbrennungsvorgangs in der Brennkraftmaschine wird das Reduktionsmittel aus dem Reduktionsmittelspeicher bis zum Dosierventil gefördert, von wo es in die Mischkammer gespritzt wird, um dort mit dem Abgas in Verbindung gebracht zu werden. Die Druckluftpumpe befindet sich während des Verbrennungsvorgangs im Stillstand.

Nach Beendigung des Verbrennungsvorgangs wird die Förderung des Reduktionsmittels gestoppt. Das Reduktionsmittel, welches sich in dem Dosierventil und in der Reduktionsmittelleitung befindet, verbleibt dort.

Um nun das Reduktionsmittel, welches sich in der Reduktionsmittelleitung zwischen erstem Ventil bzw. Druckluftpumpe und der Mischkammer befindet, zu entfernen, wird in einem ersten Schritt das erste Ventil in eine Stellung versetzt wird, dass Druckluft durch das erste Ventil über einen Teil der Reduktionsmittelleitung bis in das Dosierventil gefördert wird. Mit Änderung der Stellung des ersten Ventils, welches vorzugsweise als 3/3-Wegeventil ausgebildet ist, wird die Druckluftpumpe in Betrieb gesetzt. In der Druckluftpumpe wird die gefilterte Luft komprimiert. Durch die gefilterte und komprimierte Luft wird das Dosierventil sowie die Reduktionsmittelleitung, welche sich zwischen Druckluftpumpe und Dosierventil befindet, vollständig von Reduktionsmittel gespült. Hierdurch wird ein Verkrusten, Auskristallisieren, Verstopfen oder auch ein Gefrieren des Reduktionsmittels in diesem genannten Bereich unterbunden.

Weiterhin vorteilhaft ist es, dass zur Vermeidung des Rückflusses von Reduktionsmittel oder anderer Flüssigkeit in das Dosierventil, dieses nach Entfernung des Reduktionsmittels schließbar ist. Hierdurch wird gewährleistet, dass das gereinigte Dosierventil und die Reduktionsmittelleitung sauber bzw. leer bleiben.

Um den restlichen Teil der Reduktionsmittelleitung zu reinigen ist es von Vorteil, dass in einem zweiten Schritt das erste Ventil und das zweite Ventil in eine Stellung versetzt werden, dass Druckluft durch das erste Ventil, über die Reduktionsmittelleitung, durch das zweite Ventil bis in den Reduktionsmittelspeicher gefördert wird. Das zweite Ventil ist während des Verbrennungsprozesses derart geschaltet, dass das Reduktionsmittel vom unteren Bereich des Reduktionsmittelspeichers bis zum Dosierventil gefördert wird. Das zweite Ventil, vorzugsweise ein 3/2-Wegeventil, wird nach Beendigung des Verbrennungsprozesses umgeschaltet, so dass das in der Reduktionsmittelleitung befindliche Reduktionsmittel über eine Rohrleitung zurück in den oberen reduktionsmittelfreien Bereich des Reduktionsmittelspeichers fließen kann. Das erste Ventil wird dazu ebenfalls so umgeschaltet, dass die Druckluft nicht mehr zum Dosierventil, sondern zum Reduktionsmittelspeicher geleitet wird. Hierdurch wird ein Verkrusten, Auskristallisieren, Verstopfen oder auch ein Gefrieren des Reduktionsmittels auch in diesem genannten Bereich unterbunden.

Es ist aber auch in einer Ausführungsform möglich, dass die Druckluft parallel in beide Richtungen, d.h. in Richtung Reduktionsmittelspeicher und in Richtung des Dosierventils, durch die Reduktionsmittelleitungen strömen kann.

Eine weitere vorteilhafte Ausgestaltung sieht vor, dass die Förderung von Druckluft in Abhängigkeit der vom Temperaturfühler gemessenen Außentemperatur erfolgt. Wenn die Außentemperatur in einem nicht kritischen Bereich liegt, d.h. über der Gefriertemperatur des Reduktionsmittels, ist es nicht zwingend notwendig, die Reduktionsmittelleitungen sowie das Dosierventil zu reinigen. Aus diesem Grund kann die Reinigung außentemperaturabhängig durchgeführt werden. Es ist auch möglich nur einen Bereich der Apparatur durch die Druckluft spülen zu lassen. Insbesondere der Bereich des Dosierventils ist aufgrund der im Abgastrakt vorherrschenden Temperaturen besonders anfällig für Verkrustungen und damit Verstopfungen. So ist sinnvoll gerade diesen Bereich zu reinigen, auch unabhängig von der gemessenen Außentemperatur.

Idealerweise wird die Steuerung bzw. die Reihenfolge der Steuerung der Fördervorrichtung, des ersten Ventils, des zweiten Ventils, der Druckluftpumpe, des Dosierventils und des Temperaturfühlers durch zumindest ein Steuergerät bestimmt. Das Steuergerät misst die Außentemperatur, stellt fest, ob der Verbrennungsvorgang stattfindet oder beendet wurde und gibt Impulse an die Bestandteile der Apparatur ab. So regelt es die Förderung des Reduktionsmittels sowie der Druckluft durch die Apparatur. Hierfür steuert es sämtliche Ventile sowie die Fördervorrichtung und die Druckluftpumpe.
Die Dauer des Spülvorgangs ist hierbei zweckmäßigerweise vorher zu ermitteln und im Steuergerät festzuhalten.

### Zeichnung

Weitere Einzelheiten und Vorteile der erfindungsgemäßen Vorrichtung und des erfindungsgemäßen Verfahrens ergeben sich aus der nachfolgenden Beschreibung, und den zugehörigen Zeichnungen. Hier ist ein bevorzugtes Ablaufschema des Verfahrens mit den dazu notwendigen Einzelheiten dargestellt ist. Es zeigt
- Figur 1: eine blockschaltbildartige Darstellung einer bevorzugten Ausführungsform der erfindungsgemäßen Vorrichtung während des Verbrennungsvorgangs,
- Figur 2: eine blockschaltbildartige Darstellung der Vorrichtung gemäß Figur 1 nach Beendigung des Verbrennungsvorgangs, wobei der Bereich zwischen Druckluftpumpe und Dosierventil gespült wird, und
- Figur 3: eine blockschaltbildartige Darstellung der Vorrichtung gemäß den Figuren 1 und 2 nach Beendigung des Verbrennungsvorgangs, wobei der Bereich zwischen Druckluftpumpe und Reduktionsmittelspeicher gespült wird.

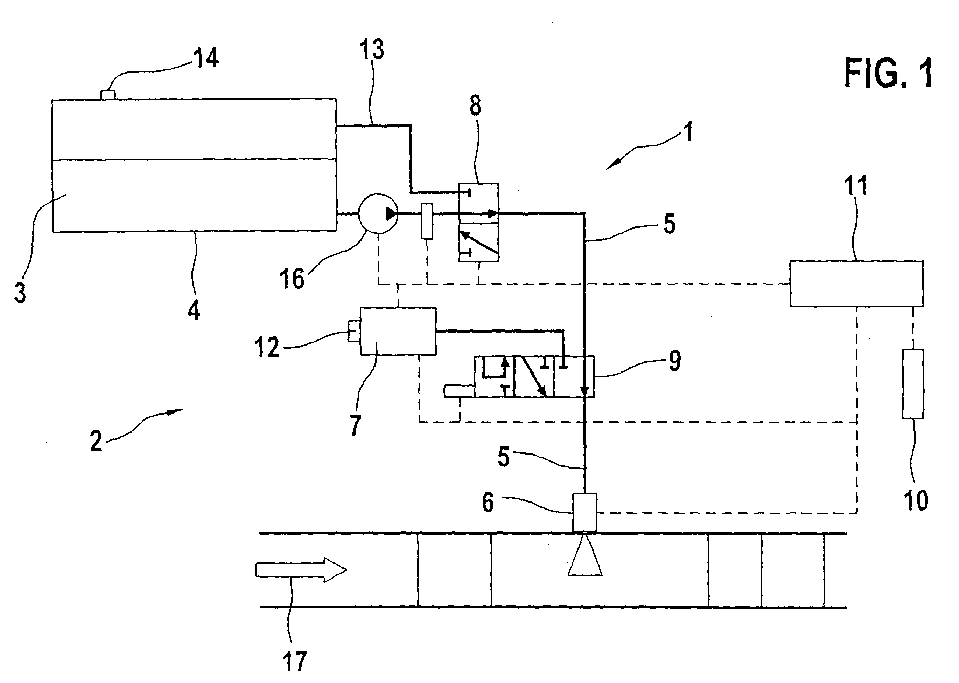

Figur 1 zeigt eine bevorzugte Ausführungsform der erfindungsgemäßen Vorrichtung 1 zur Entfernung eines Reduktionsmittels, welche in eine Apparatur 2 zum Nachbehandeln von Abgasen einer Brennkraftmaschine integriert ist, während des Verbrennungsvorgangs. Hierbei wird das Reduktionsmittel 3 mit Hilfe einer Fördervorrichtung 16, zweckmäßigerweise eine Pumpe, von dem Reduktionsmittelspeicher 4 entlang einer Reduktionsmittelleitung 5 in ein Dosierventil 6 gepumpt, von wo es in den Abgastrakt der Brennkraftmaschine eingespritzt wird und sich mit dem Abgas 17 der Brennkraftmaschine vermischt. Das erste Ventil 9 und das zweite Ventil 8 sind derart geschaltet, dass das Reduktionsmittel 3 ungehindert durch die Reduktionsmittelleitung 5 bis zum Dosierventil 6 strömen kann.

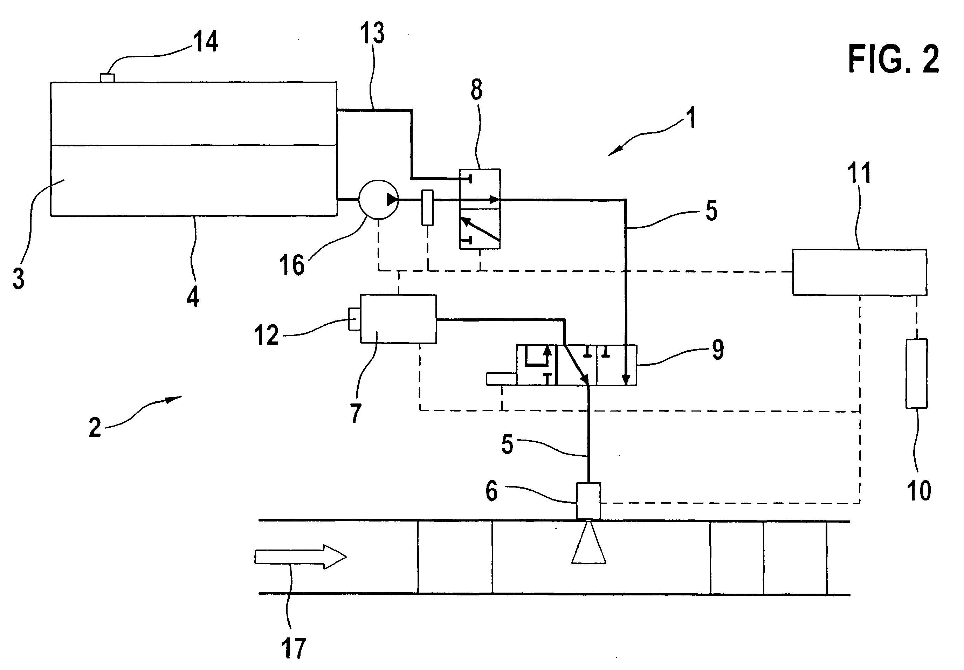

In Figur 2 wird nach Beendigung des Verbrennungsvorgangs der Brennkraftmaschine die Druckluftpumpe 7 in Betrieb gesetzt, d.h. Umgebungsluft von der Druckluftpumpe 7 angesaugt und durch ein Filterelement 12 gereinigt. Die komprimierte Druckluft wird über das erste Ventil 9 in die Reduktionsmittelleitung 5 eingedüst. Das erste Ventil 9 ist dabei so geschaltet, dass nur der Teil der Reduktionsmittelleitung 5, der zwischen erstem Ventil 9 und Dosierventil 6 liegt, sowie das Dosierventil 6 selbst von der Druckluft gespült wird. Der Spülvorgang wird durch ein Steuergerät 11 gesteuert. Nach Entfernung des Reduktionsmittels 3 aus diesem Bereich der Apparatur 2 wird das Dosierventil 6 durch ein Steuergerät 11 geschlossen, damit keine Flüssigkeit zurück in diesen Bereich gelangen kann.

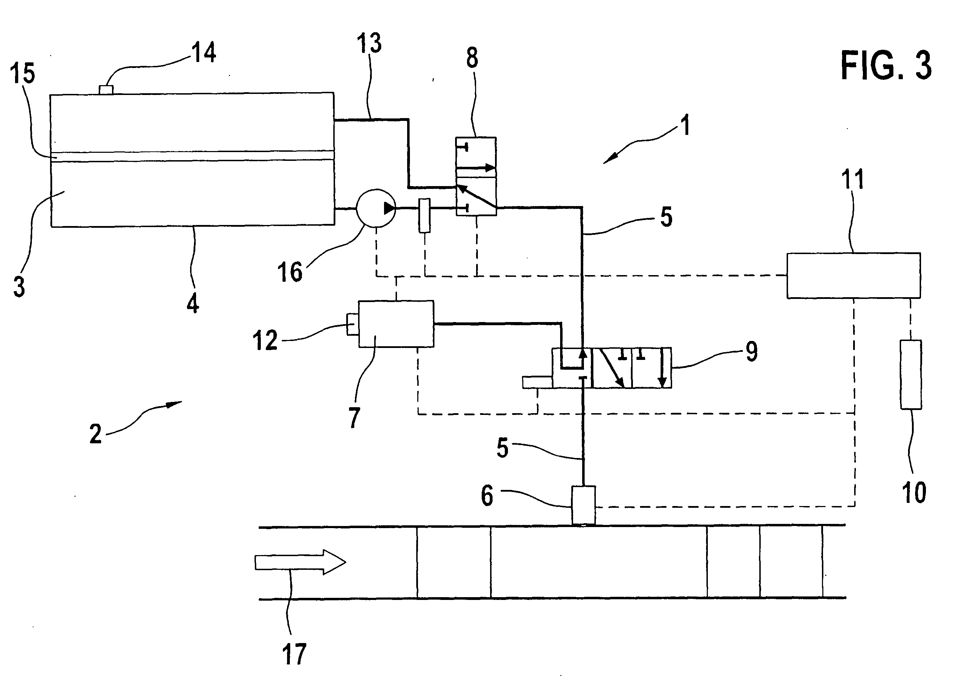

Figur 3 zeigt die Spülung des Bereichs der Reduktionsmittelleitung 5 bzw. einer Rückleitung 13 zwischen Druckluftpumpe 7 und Reduktionsmittelspeicher 4. Das erste Ventil 9 wird umgeschaltet, so dass die Druckluft nicht mehr in Richtung Dosierventil 6 gepumpt wird, sondern in Richtung Reduktionsmittelspeicher 4. Das zweite Ventil 8 wird ebenfalls umgeschaltet, so dass das Reduktionsmittel durch die Rückleitung 13 in den Reduktionsmittelspeicher 4 fließt, nachdem Druckluft durch die Leitungen 5, 13 gepumpt wird. Die Rückleitung 13 ist dabei so an dem Reduktionsmittelspeicher 4 angebracht, dass die Einlauföffnung oberhalb des Reduktionsmittelspiegels im Reduktionsmittelspeicher 4 liegt. Der Reduktionsmittelspiegel wird durch das zurückgeflossene Reduktionsmittel 15 angehoben. Damit trotz der einströmenden Druckluft der Druck im Reduktionsmittelspeicher 4 konstant gehalten wird, weist der Reduktionsmittelspeicher 4 ein Entlüftungsventil 14 auf.

Das Reinigen der Apparatur 2 kann in Abhängigkeit der Außentemperatur erfolgen, welche das Steuergerät 11 mit Hilfe eines Temperaturfühlers 10 überwacht. Beispielsweise gibt das Steuergerät 11 nur dann einen Impuls an die Druckluftpumpe 7 ab, wenn die Außentemperatur niedriger als 0°C ist, um so ein Gefrieren der Reduktionsmittelleitung 5 bzw. der Rückleitung 13 zu vermeiden. Eine Auftauvorrichtung, die zu einem erhöhten Energieverbrauch führen würde, wird deshalb nicht benötigt.
Das Steuergerät 11 kann aber auch unabhängig von der Außentemperatur Signale zum Spülen der Apparatur 2 geben, damit ein Verstopfen der Leitungen 5, 13 und des Dosierventils 6 sicher verhindert werden kann.

### Bezugszeichenliste:

- 1: Vorrichtung
- 2: Apparatur
- 3: Reduktionsmittel
- 4: Reduktionsmittelspeicher
- 5: Reduktionsmittelleitung
- 6: Dosierventil
- 7: Druckluftpumpe
- 8: zweites Ventil
- 9: erstes Ventil
- 10: Temperaturfühler
- 11: Steuergerät
- 12: Filterelement
- 13: Rücklaufleitung
- 14: Entlüftungsventil
- 15: Zurückgeflossenes Reduktionsmittel
- 16: Fördervorrichtung
- 17: Abgas der Brennkraftmaschine

## Patentansprüche

1. Vorrichtung (1) zur Entfernung eines Reduktionsmittels (3), insbesondere von Harnstoff bzw. einer Harnstoff- Wasser-Lösung, aus einer Apparatur (2) zum Nachbehandeln von Abgasen einer Brennkraftmaschine, welche zumindest einen Reduktionsmittelspeicher (4), eine Fördervorrichtung (16) für das Reduktionsmittel (3) und eine Reduktionsmittelleitung (5) aufweist, **dadurch gekennzeichnet, dass** ein Dosierventil (6) vorgesehen ist, dass zur Entfernung des Reduktionsmittels (3) nach Beendigung des Verbrennungsvorgangs der Brennkraftmaschine, insbesondere aus dem Dosierventil (6) und/oder der Reduktionsmittelleitung (5) der Apparatur (2), zumindest eine Druckluftpumpe (7) vorgesehen ist, wobei die Druckluftpumpe (7) an ein in der Reduktionsmittelleitung (5) angeordnetes erstes Ventil (9), insbesondere ein 3/3-Wegeventil, angeschlossen ist, dass zur Leitung des Reduktionsmittels (3) zwischen dem ersten Ventil (9) und dem Reduktionsmittelspeicher (4) ein zweites Ventil (8), insbesondere ein 3/2-Wegeventil, angeordnet ist, wobei zwischen dem zweiten Ventil (8) und dem Reduktionsmittelspeicher (4) eine Rücklaufleitung (13) für das Reduktionsmittel (3) angeordnet ist, wobei eine Öffnung der Rücklaufleitung in einem reduktionsmittelfreien Bereich des Reduktionsmittelspeichers (4) liegt.

2. Vorrichtung nach Anspruch 1, **dadurch gekennzeichnet, dass** die Vorrichtung (1) einen Temperaturfühler (10) aufweist.

3. Vorrichtung nach einem der vorherigen Ansprüche, **dadurch gekennzeichnet, dass** die Vorrichtung (1) zumindest ein Steuergerät (11) zur Steuerung der Fördervorrichtung (16), der Druckluftpumpe (7), des Dosierventils (6), des ersten und zweiten Ventils (9, 8) und/oder zur Detektierung der Außentemperatur durch den Temperaturfühler (10) aufweist.

4. Vorrichtung nach einem der vorherigen Ansprüche, **dadurch gekennzeichnet, dass** die Druckluftpumpe (7) ein Filterelement (12) zur Reinigung der Ansaugluft aufweist.

5. Vorrichtung nach einem der vorherigen Ansprüche, **dadurch gekennzeichnet, dass** die Druckluftpumpe (7) über eine Batterie antreibbar ist.

6. Verfahren zur Entfernung des Reduktionsmittels (3) aus einer Apparatur (2) zum Nachbehandeln von Abgasen einer Brennkraftmaschine, insbesondere aus einem Dosierventil (6) und/oder einer Reduktionsmittelleitung (5) der Apparat (2), mit einer Vorrichtung (1) nach zumindest einem der vorherigen Ansprüche, **dadurch gekennzeichnet, dass** in einem ersten Schritt das erste Ventil (9) in eine Stellung versetzt wird, dass Druckluft durch das erste Ventil (9) über einen Teil der Reduktionsmittelleitung (5) bis in das offene Dosierventil (6) gefördert wird, wobei zur Vermeidung des Rückflusses von Reduktionsmittel (3) oder anderer Flüssigkeit in das Dosierventil (6) dieses nach Entfernen des Reduktionsmittels (3) schließbar ist, und dass in einem zweiten Schritt das erste Ventil (9) und das zweite Ventil (8) in eine Stellung versetzt werden, dass Druckluft durch das erste Ventil (9), über die Reduktionsmittelleitung (5), durch das zweite Ventil (8) bis in den Reduktionsmittelspeicher (4) gefördert wird.

7. Verfahren nach zumindest einem der Ansprüche 9 bis 12, **dadurch gekennzeichnet, dass** die Förderung von Druckluft in Abhängigkeit der vom Temperaturfühler (10) gemessenen Außentemperatur erfolgt.

## Claims

1. Apparatus (1) for removing a reducing agent (3), in particular urea or a urea/water solution, from a device (2) for the after-treatment of exhaust gases of an internal combustion engine, which apparatus (1) has at least one reducing-agent tank (4), one conveying apparatus (16) for the reducing agent (3) and one reducing-agent line (5), **characterized in that** a metering valve (6) is provided, **in that** at least one compressed-air pump (7) is provided for the removal of the reducing agent (3) after the combustion process of the internal combustion engine has ended, in particular from the metering valve (6) and/or the reducing-agent line (5) of the device (2), the compressed-air pump (7) being connected to a first valve (9), in particular a 3/3-way valve, which is arranged in the reducing-agent line (5), and **in that** a second valve (8), in particular a 3/2-way valve, is arranged for guiding the reducing agent (3) between the first valve (9) and the reducing-agent tank (4), a return line (13) for the reducing agent (3) being arranged between the second valve (8) and the reducing-agent tank (4), an opening of the return line being arranged in a region of the reducing-agent tank (4) which is free from reducing agent.

2. Apparatus according to Claim 1, **characterized in that** the apparatus (1) has a temperature sensor (10).

3. Apparatus according to one of the preceding claims, **characterized in that** the apparatus (1) has at least one control unit (11) for controlling the conveying apparatus (16), the compressed-air pump (7), the metering valve (6), the first and second valves (9, 8) and/or for detecting the outside temperature with the temperature sensor (10).

4. Apparatus according to one of the preceding claims, **characterized in that** the compressed-air pump (7) has a filter element (12) for cleaning the intake air.

5. Apparatus according to one of the preceding claims, **characterized in that** the compressed-air pump (7) can be driven via a battery.

6. Method for removing the reducing agent (3) from a device (2) for the after-treatment of exhaust gases of an internal combustion engine, in particular from a metering valve (6) and/or a reducing-agent line (5) of the device (2), having an apparatus (1) according to at least one of the preceding claims, **characterized in that** the first valve (9) is moved into a position in a first step, such that compressed air is conveyed through the first valve (9) via a part of the reducing-agent line (5) as far as into the open metering valve (6), it being possible for the metering valve (6) to be closed after removal of the reducing agent (3) in order to avoid the return flow of reducing agent (3) or other fluid into the said metering valve (6), and **in that** the first valve (9) and the second valve (8) are moved into a position in a second step, such that compressed air is conveyed through the first valve (9), via the reducing-agent line (5), through the second valve (8) and as far as into the reducing-agent tank (4).

7. Method according to at least one of Claims 9 to 12, **characterized in that** compressed air is conveyed as a function of the outside temperature which is measured by the temperature sensor (10).

## Revendications

1. Dispositif (1) pour éliminer un agent de réduction (3), en particulier de l'urée ou une solution urée/eau, d'un appareil (2) de post-traitement de gaz d'échappement d'un moteur à combustion interne, qui présente au moins un réservoir d'agent de réduction (4), un dispositif d'alimentation (16) pour l'agent de réduction (3) et une conduite d'agent de réduction (5),
**caractérisé par**
- une soupape dosage (6),
- au moins une pompe à air comprimé (7) prévue pour éliminer l'agent de réduction (3) en particulier de la soupape de dosage (6) et/ou de la conduite d'agent de réduction (5) de l'appareil (2) à la fin du processus de combustion du moteur à combustion interne, la pompe à air comprimé (7) étant raccordée à une première soupape (9), en particulier une soupape à 3/3 voies, disposée dans la conduite d'agent de réduction (5),
- une deuxième soupape (8), en particulier une soupape à 3/2 voies, raccordée entre la première soupape (9) et le réservoir d'agent de réduction (4) pour la conduction de l'agent de réduction (3), et
- entre la deuxième soupape (8) et le réservoir d'agent de réduction (4) une conduite de retour (13) pour l'agent de réduction (3), avec une ouverture de la conduite de retour située dans une zone sans agent de réduction du réservoir d'agent de réduction (4).

2. Dispositif selon la revendication 1,
**caractérisé en ce que**
le dispositif (1) présente un capteur de température (10).

3. Dispositif selon l'une quelconque des revendications précédentes,
**caractérisé en ce que**
le dispositif (1) présente au moins un appareil de commande (11) pour commander le dispositif d'alimentation (16), la pompe à air comprimé (7), la soupape de dosage (6), la première et la deuxième soupapes (9, 8) et/ ou pour détecter la température extérieure à l'aide du capteur de température (10).

4. Dispositif selon l'une quelconque des revendications précédentes,
**caractérisé en ce que**
la pompe à air comprimé (7) présente un élément filtrant pour nettoyer l'air d'admission.

5. Dispositif selon l'une quelconque des revendications précédentes,
**caractérisé en ce que**
la pompe à air comprimé (7) peut être entraînée par une batterie.

6. Procédé pour éliminer l'agent de réduction (3) d'un appareil (2) de post-traitement de gaz d'échappement d'un moteur à combustion interne, en particulier d'une soupape de dosage (6) et/ou d'une conduite d'agent de réduction (5) de l'appareil (2), au moyen d'un dispositif (1) selon au moins l'une des revendications précédentes,
**caractérisé en ce que**
dans une première étape la première soupape (9) est amenée dans une position dans laquelle l'air comprimé est transporté à travers la première soupape (9) sur une partie de la conduite d'agent de réduction (5) jusque dans la soupape de dosage (6) ouverte, pour éviter le reflux d'agent de réduction (3) ou d'un autre liquide dans la soupape de dosage (6) celle-ci pouvant être fermée après l'élimination de l'agent de réduction (3), et
dans une deuxième étape la première soupape (9) et la deuxième soupape (8) sont amenées dans une position dans laquelle l'air comprimé est transporté à travers la première soupape (9), par la conduite d'agent de réduction (5), à travers la deuxième soupape (8) jusque dans le réservoir d'agent de réduction (4).

7. Procédé selon au moins l'une des revendications 9 à 12,
**caractérisé en ce que**
le transport d'air comprimé s'effectue en fonction de la température extérieure mesurée par le capteur de température (10).
